## Europäisches Patentamt
## European Patent Office
## Office européen des brevets

(19)

(11) Publication number: **0 051 307**
**A1**

(12)

# EUROPEAN PATENT APPLICATION

(21) Application number: **81109411.9**

(22) Date of filing: **30.10.81**

(51) Int. Cl.³: **B 60 H 1/00**

(30) Priority: **04.11.80 JP 153716/80**

(43) Date of publication of application:
**12.05.82 Bulletin 82/19**

(84) Designated Contracting States:
**DE FR GB**

(71) Applicant: **NISSAN MOTOR COMPANY, LIMITED**
**No.2, Takara-cho, Kanagawa-ku**
**Yokohama City(JP)**

(72) Inventor: **Iijima, Tetsuya**
**No. 7-19-20, Tsukimino**
**Yamato City(JP)**

(72) Inventor: **Takahashi, Seiichi**
**No. 4-16-4, Hamadayama**
**Suginami-ku Tokyo(JP)**

(74) Representative:- **Patentanwälte Grünecker,**
**Dr.Kinkeldey Dr.Stockmair, Dr.Schumann,Jakob,**
**Dr.Bezold Meister, Hilgers, Dr.Meyer-Plath**
**Maximilianstrasse 43**
**D-8000 München 22(DE)**

(54) **Control for an air conditioning system.**

(57) In an air conditioning method and system for automotive vehicles in which a passenger compartment air temperature is maintained at a desired level, an air conditioner outlet duct temperature is controlled in accordance with a target outlet duct temperature produced by an arithmetic operation of temperatures at various locations of the automotive vehicle.

In order to produce the target outlet duct air temperature, a base outlet duct air temperature is calculated in accordance with a predetermined equation representing a heat equilibrium within the passenger compartment of the vehicle, a temperature correction value corresponding to the passenger compartment air temperatures is then added thereto.

EP 0 051 307 A1

./...

FIG. 5(a)

30 — OUTSIDE AIR TEMP. SENSOR $T_A$

31 — SOLAR HEAT TEMP. SENSOR $T_S$

32 — PASS. COMP. AIR TEMP. PRESET DEVICE $T_O$

33 — PASS. COMP. AIR TEMP. SENSOR $T_P$

34 — OUTLET DUCT AIR TEMP. SENSOR $T_D$

35 A-D CONVERTER

40

41 BASE OUTLET DUCT TEMPERATURE CALCULATING UNIT $T_{ACO}$

42 TEMPERATURE CORRECTION VALUE CALCULATING UNIT $\Delta T$

43 ADDER CIRCUIT $T_{AC}$

44 COMP.

45 D-A CONVERTER

46 ACTUATOR DRIVER

47 AIR MIX DOOR ACTUATOR

CONTROL FOR AN AIR CONDITIONING SYSTEM

BACKGROUND OF THE INVENTION

1. Field of the Invention

The present invention relates to a control method and system for an air conditioning system for automotive vehicles, and more particularly to a method and system in which an air conditioner outlet duct air temperature is controlled in accordance with the temperatures at various locations of the automotive vehicle.

2. Description of the Prior Art

In recent years, automotive vehicles are equipped with an air conditioning system by which the air within the passenger compartment is conditioned at a desired temperature value.

In air conditioning systems, air is introduced through an air intake via a blower fan, and the introduced air is cooled at a cooling unit. A part of the cooled air is then heated by a heater unit, and mixed with the other part of the cooled air by means of an air mix door.

In order to maintain the temperature within the passenger compartment at an appropriate preset value, the opening degree of the air mix door is so adjusted, by a control circuit that an outlet duct air of a desired temperature is obtained. Furthermore, the control circuit includes a bridge circuit comprising thermistors for sensing the temperatures at various location of the vehicle, such as the outside air temperature, passenger compartment temperature, and the output signal of the bridge circuit is used for adjusting the air mix door position.

In such a prior art air conditioning system, however, the control of the outlet duct air temperature is greately dependent on the temperature-resistance characteristic of the thermistors used in the bridge circuit. And therefore, a desired output signal characteristic of the bridge circuit is obtained only by adjusting the resistance value of a variable resistor connected in series or in parallel with the thermistors in the bridge circuit.

Accordingly, it is very difficult to maintain the passenger compartment air temperature accurately at a preset value, especially when the thermal load applied to the vehicle, such as the outside air temperatuer, has changed very much.

A more detailed description of the prior art air conditioning system is made hereinafter with reference to the attached drawings under DETAILED DESCRIPTION OF THE PREFERRED EMBODIMENTS.

## SUMMARY OF THE INVENTION

The present invention is based on the recognition of the above problems, and an object of the present invention is therefore to provide a control method and system in which the temperature of the air discharged from an outlet duct of the air conditioning system is acculately controlled for maintaining the temperature within the passenger compartment presicely at a preset value.

According to an aspect of the invention, a control method for an air conditioning system for an automotive vehicle, the air conditioning system having an outlet duct via which conditioned air is discharged into a passenger compartment and an air mix door to control the mixing of a hot air with a cool air to provide the conditioned air, the control method comprises the steps of: (a) detecting at least an outside air temperature $T_A$ and a passenger compartment air temperature $T_P$; (b) setting a desired passenger compartment air temperature $T_O$; (c) performing arithmetic operation based on said desired passenger compartment air temperature $T_P$ and outside air temperature $T_A$ to provide a target outlet duct air temperature $T_{AC}$; and (d) controlling the opening position of the air mix door in accordance with said target outlet duct air temperature $T_{AC}$.

According to another aspect of the invention, a control system for an air conditioning system for an automotive vehicle, the air conditioning system having an outlet duct via which conditioned air is discharged into a passenger compartment and an air mix door to control the mixing of a hot air with a cool air to provide the conditioned air, the control system comprises: (a) a passenger compartment air temperature presetting device for presetting a desired passenger compartment air temperature $T_0$; (b) an outside air temperature sensor for sensing an outside air temperature $T_A$; (c) passenger compartment air temperature sensor for sensing a passenger compartment air temperature $T_P$; (d) an arithmetic control unit for performing arithmetic operation based on said desired passenger comparment air temperature $T_P$ and outside air temperature $T_A$ to provide a target outlet duct air temperature $T_{AC}$; and (e) means for controlling the opening position of the air mix door in accordance with said target outlet duct air temperature $T_{AC}$.

The arithmetic control can be replaced with a microcomputer including a CPU, a ROM, a RAM, a clock signal generator, etc.

BRIEF DESCRIPTION OF THE DRAWINGS

Fig. 1 is a diagramic illustration of an air

-4-

conditioning system;

Fig. 2 is a schematic block diagram of a prior art control circuit used with the air conditioning system shown in Fig. 1;

Fig. 3(a) is a graph showing a heat equilibrium characteristic curve T expressed in terms of the relationship between an outlet duct air temperature and a passenger compartment air temperature;

Fig. 3(b) is a graph showing a temperature control characteristic curve S of an air conditioning system;

Fig. 3 (c) is a graph showing a heat equilibrium condition of an air conditioning sytem in which a stable temperature is obtaind by combining the characteristic curves T and S shown in Figs. 3(a) and 3(b);

Fig. 4 is a graph showing temperature control characteristics and heat eqilibrium conditions of a prior art air conditioning system against a plurality of outside air temperatures;

Fig. 5 (a) is a schematic block diagram of a first embodiment of control system according to the present invention;

Fig. 5(b) is a schematic block diagram of a second embodiment of control system according to the present invention;

Fig. 6 is a flow chart showing an operation of the control system shown in Fig. 5(a); and

Fig. 7 is a temperature control characteristics and heat equlibrium conditions of the air conditioning system according to the present invention.

DESCRIPTION OF THE INVENTION

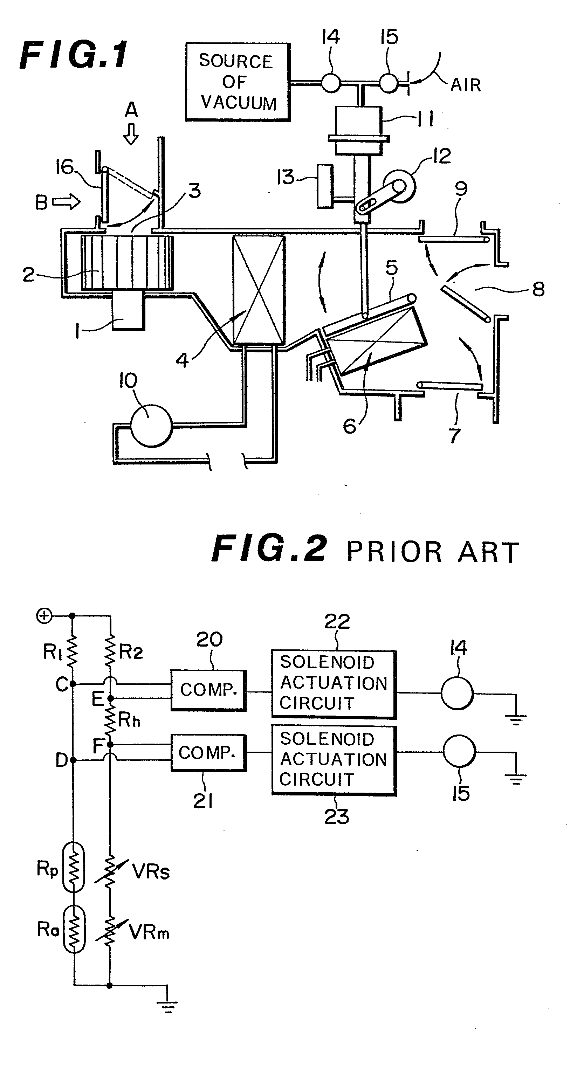

In order for facilitating the understanding of the present invention, reference is first made to Fig. 1 in which an example of an air conditioning system construction is illustrated.

In Fig. 1, air is introduced inside the air conditioning system through an air inlet duct 3 by a blower fan 2 driven by a motor 1. The introduced air is then cooled by a cooling unit 4. After that, a part of the cooled air is heated by a heater unit 6 and then mixed with the other unheated part of cooled air by means of an air mix door 5. The so obtained mixed air is finally discharged outside of the air conditioning system from a plurality of outlet ducts 7, 8 and 9 into a passenger compartment.

The reference numerarl 10 indicates a compressor, the numeral 11 indicates an actuator for positioning the air mix door 5, the numeral 12 indicates a sensor for sensing the position on opening degree of the air mix door 5, the numeral 13 indicates a slide switch operatively cooperating with the air mix door 5, the numerals 14 and 15 indicate solenoid valves to activate the actuator 11, namely the numeral 14 indicates a solenoid valve to introduce a vacuum pressure from a source of vacuum, for example an engine intake manifold, into the actuator 11 for driving the air mix door 5 in one direction, and the numeral 15 indicates a solenoid valve to reduce the vacuum in the actuator 11 to the atmospheric pressure for driving the air mix door 5 in the opposite direction.

The amount of air to be introduced into the air conditioning system via the blower fan 2 is controlled by means of an air intake door 16. When the air intake door 16 is located at a position shown by the solid line in Fig. 1, only outside air is introduced into the air conditioning system as shown by the arrow A, which is called "outside air introduction mode". On the other hand, when the air intake door 16 is located at a position shown by the dashed lines in Fig. 1, only air within the passenger compartment is introduced into the air conditioning system as shown by the arrow B, which is called "inside air recirculation mode". The air within the passenger compartment is refreshed with the outside air when the outside air introduction mode is selected, and the air recirculated within the passenger compartment is efficiently cooled or heated when the inside air recirculation mode is selected.

Reference is now made to Fig. 2, in which a prior art control circuit for an air conditioning system, such as the system shown in Fig. 1, is diagramatically illustrated. In Fig. 2, the control circuit includes a bridge circuit which comprises a first set of series connected resistors including a pair of thermistors, namely, a passenger compartment temperature sensor $R_p$, and an outside air temperature sensor $R_a$, and a fisrt fixed resistor $R_1$, and a second set of series connected resistors including a fixed resistor $R_2$, a potentiometer $VR_s$ for presetting the passenger compartment air temperature, a potentiometer transducer $VR_m$ for sensing an air mix door openging degree, and a fixed resistor $R_h$.

A junction C between the resistors $R_1$ and $R_p$ and a junction E between the resisters $R_2$ and $R_h$ are connected to input terminals of a comparator 20 whose output is connected to a solenoid valve actuation circuit 22 for the solenoid valve 14. On the other hand, a junction D between the resistors $R_1$ and $R_p$, and a junction F between the resistors $R_h$ and $R_s$ are connected to input terminals of a comparator 21 whose output is connected to a solenoid valve actuation circuit 23 for the solenoid valve 15.

When the potential level at the junction C becomes higher than the potential level at the junction E, the solenoid valve 14 is actuated by the solenoid valve actuation circuit 22, so that the vaccum pressure is introduced into the actuator 11 for driving the air mix door 5 in one direction. Conversely, when the potential level at the junction D becomes lower than the potential level at the junciton F, the solenoid valve 15 is actuated by the solenoid valve actuation circuit 23, so that the vacuum in the actuator 11 is reduced for driving the air mix door 5 in the opposite direction. The opening degree of the air mix door 5 is thus controlled by means of the actuator 11 in accordance with the output signal of the control circuit which is responsive to the change in the output potential level of the bridge circuit provided. Therein, resistor Rh is used for providing a hystersis characteristic between the operations of the solenoids 14 and 15.

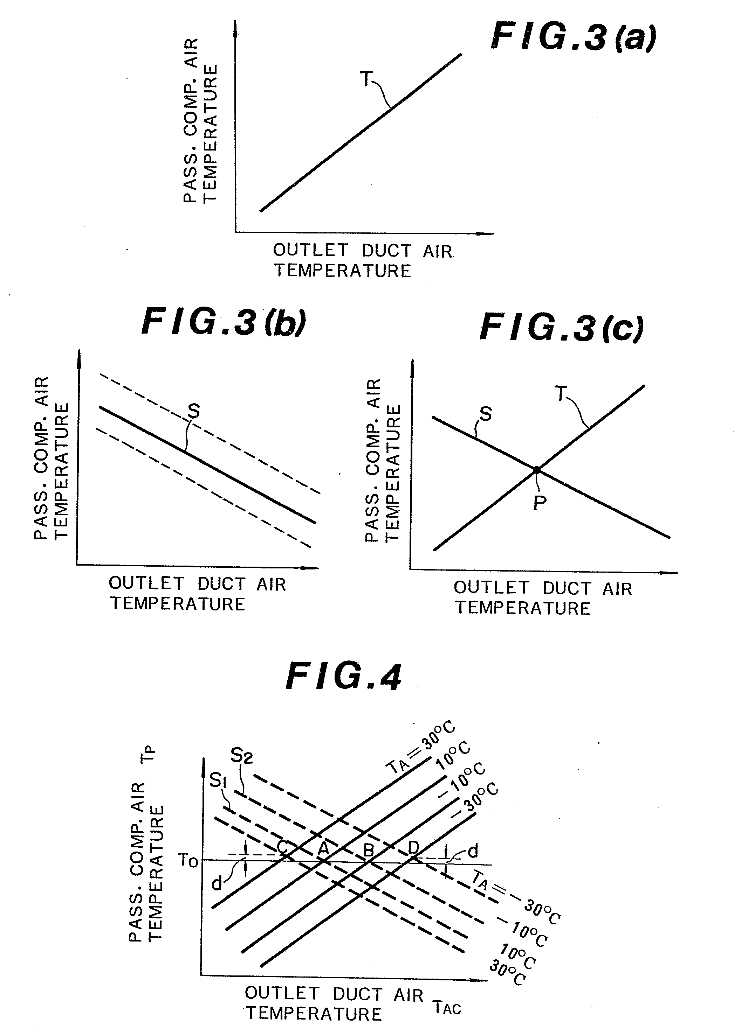

In order to facilitate the more precise understanding of the temperature control operation of the above control circuit, the operation of the air conditioning system is discussed from a view point of the heat equilibrium with reference to Figs. 3(a) to 3(c) and 4.

Reference is first made to Fig. 3(a) which shows a heat equilibrium characteristic curve T within the passenger compartment, against fixed outlet duct air temperatures. In other words, Fig. 3(a) shows the stable points of the passenger compartment air temperature corresponding to various values of the outlet duct air temperature of the air conditioning system.

As shown in Fig. 3(a) when the outlet duct air temperature is low, the passenger compartment air temperature is settled low and when the outlet duct air temperature is high, the passenger compartment air temperature is settled high. The above tendency is unchanged even if the heat supplied by the air conditioning system is absorbed by the thermal load applied to the passenger compartment (heat supplied from solar ray, outside air, ventilated air, a passenger, and an equipment such as an engine, and so on).

Turning to Fig. 3(b), there is shown a temperature control characteristics of the air conditioning system along which the temperature at the outlet duct air is controlled. As shown, the temperature control characteristics is such that when the passenger compartment air temperature is high, the outlet duct air temperature is controlled at a low level, and when the passenger compartment air temperature is low, the outlet duct air temperature is controlled at a high level. In addition, it is known that the outlet duct air temperature level is controlled, in all season, within a range shown by dashed lines in the figure regardless of change in the outside air temperature.

Nextly, the heat equlibrium within the passenger compartment which holds under the condition of varying outlet duct air temperature valves is discussed.

In order to keep the passenger compartment air temperature constant, it is necessary to equalize the heat quantity supplied by the air conditioning system with the thermal load applied to the passenger compartment. Such an equilibrium state is established when the outlet duct temperature is shifted from an initial value to a point where the passenger compartment air temperature obtained by the equlibrium characteristic curve T shown in Fig. 3(a) is equal to the passenger compartment air temperature level shown in Fig. 3(b) to which the outlet duct air temperature is controlled.

Therefore, as shown in Fig. 3(c), a stable point P of the passenger compartment air temperature is obtained as an intersection of the characteristic curves T and S shown in Figs. 3(a) and 3(b).

Fig. 4 shows the temperature control characteristic and also the above explained heat equilibrium conditions of the prior art air conditioning system against a plurality of thermal load conditions such as, an outside air temperatures.

In the case of the prior art control circuit shown in Fig. 2, the output level characteristic of the bridge circuit, in other words, change in the output voltage of the bridge circuit against various temperature levels, is determined so that the above explained heat equilibrium condition is established at a preset passenger compartment air temperature To on one of heat equilibrium curves shown in Fig. 4, corresponding to a selected outside air temperature value $T_A$, for example, $T_A = +10°C$. By way of example, the resistance-temperature characteristic of the thermistor, that is, the passenger compartment air temperature sensor Rp is adjusted at first so that a heat equilibrium is established at $T_0 = 25°C$ against an outside air temperature of $+10°C$, as shown by a point A of Fig. 4. Then, the resistance-temperature characteristic of the outside air temparature sensor Ra is adjusted so that the heat equlibrium is established also at $T_0 = +25°C$ against a different outside air temperature of $-10°C$ as shown by a point B of Fig. 4. In this case, the resistance-temperature characteristic of the thermistors $R_p$, $R_a$ are corrected by respectively providing an adjustable variable resistance in series or in parallel therewith. By the above correction, the resistance-temperature characteristic of the bridge circuit is precisely adjusted against the different outside air temperatures of +10°C and -10°C, as shown by dashed lines $S_1$ and $S_2$ in Fig. 4, and precise control of the passenger compartment air temperature is possible at points A and B.

However, in the case of the above control circuit including a bridge circuit, since the temperature control characteristic is greately dependent on the resistance-temperature characteristics of the thermistors used in the bridge circuit, it is very difficult to effect an accurate control of the passenger compartment air temperature throughout a wide range of the outside air temperatrue, such as from -30°C to +40°C. For example, when the outside temperature is higher than +10°C or lower than -10°C, such as at +30°C or -30°C, an error between the preset value $T_0$ and the actually settled value $T_P$ of the passenger compartment air temperature is inevitably developed, such as an error d at eqilibrium points C and D shown in Fig. 4.

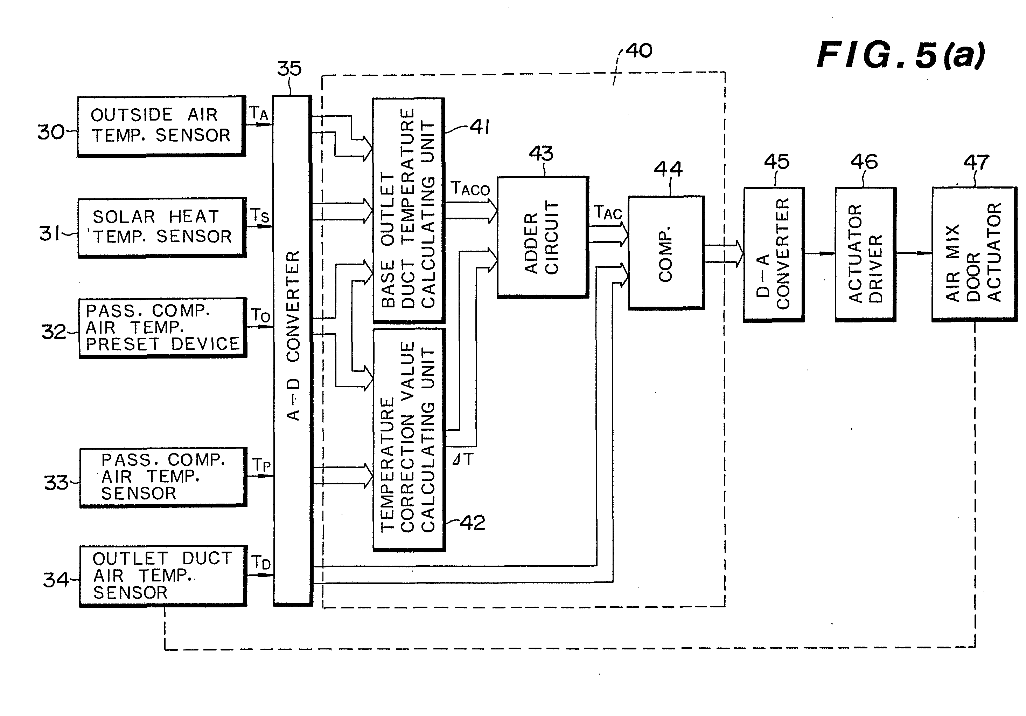

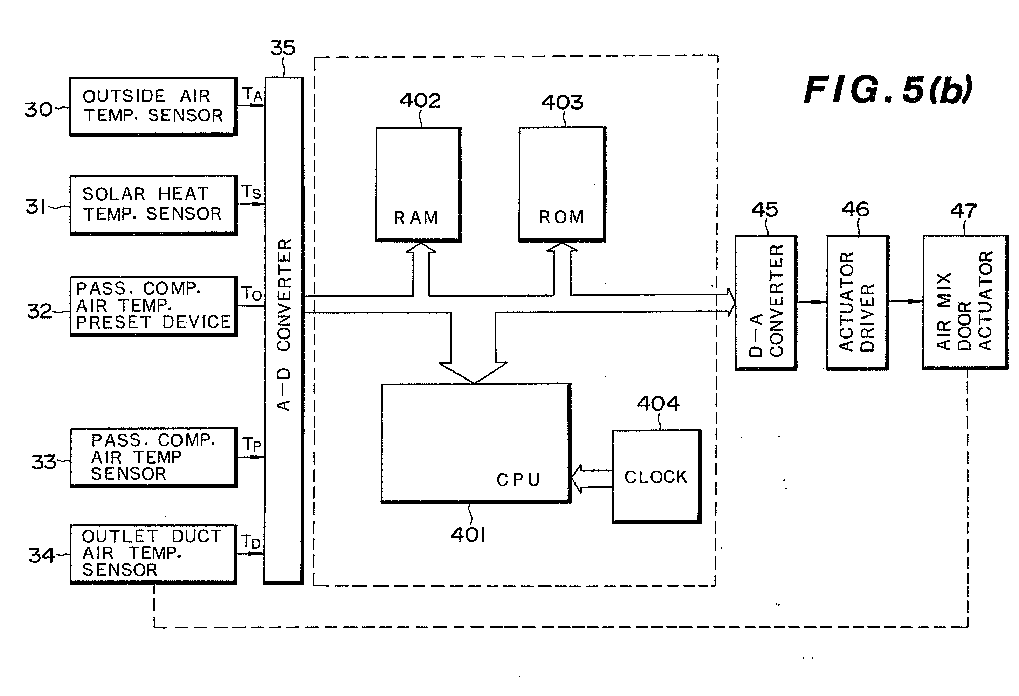

The present invention is explained hereinafter with reference to Figs. 5(a) to 7 of the accompanied drawings.

The heat quantity equilibrium as the basic concept of the present invention is explained first.

In order to maintain the temperature within the passenger compartment, the heat quantity $Q_{AC}$ supplied by an air conditioner system must be equal to the thermal load applied to the vehicle (heat from solar ray, outside air, ventilated air, a passenger, and equipment such as the engine, and so on).

Therefore, an equilibrium equation is expressed as follows:

$$Q_{AC} = Q_T + Q_V + Q_S + Q_M + Q_I \quad\quad \dots\dots (1)$$

where: $Q_T$ is the heat quantity absorbed into or radiated from the passenger compartment due to difference in temperature between outside and inside air,

$Q_V$ is the heat quantity introduced thereinto or discharged therefrom due to ventilation,

$Q_S$ is the heat quantity absorbed thereinto as solar heat,

$Q_M$ is the heat quantity radiated from passenger's body, and

$Q_I$ is the heat quantity radiated from equipements within the vehicle, such as an engine.

The above-mentioned heat quantity $Q_{AC}$ to be supplied to the passenger compartment is determined by the difference in temperature between air discharged from an air conditioning system $T_{AC}$ and air within a passenger compartment $T_P$. The thermal loads $Q_T$ and $Q_V$ are determined by the difference in temperature between outside air $T_A$ and inside, that is, passenger compartment

air $T_p$. The solar heat temperature $T_S$ is determined by incident solar energy. Accordingly, since $Q_M$ and $Q_I$ are roughly constant, the above equation (1) can be expressed as folows:

$$T_{AC} = aT_p + bT_A + cT_S + d \qquad \ldots (2)$$

where $T_{AC}$ is the target temperature of the air discharged from the air conditioning system,

$T_p$ is the passenger compartment air temperature,

$T_A$ is the outside air temperature,

$T_S$ is the solar heat temperature, and

a, b, c, and d are constants.

Now if the temperature of air discharged from the air conditining system when a passenger compartment air temperature $T_p$ reaches a preset temperature $T_0$ is considered as a basic outlet duct air temparature $T_{ACO}$, the following equation can be obtained from equation (2), because $T_p$ is $T_0$:

$$T_{ACO} = aT_0 + bT_A + cT_S + d \qquad \ldots (3)$$

By comparing equations (2) and (3), it is possible to obtain the target outlet duct air temperature $T_{AC}$ as follows:

$$T_{AC} = T_{ACO} + \varDelta T \qquad \ldots (4)$$

$$\varDelta T = \alpha(T_0 - T_p) \qquad \ldots (5)$$

Fig. 5(a) is a schematic block diagram of a first embodiment of air conditioning system according to the present invention, where the reference numaral 30 denotes an outside temperature sensor for generating a signal indicative of the outside temperature $T_A$, 31 denotes a solar heat sensor for generating a signal indicative of the solar heat temperature $T_S$, 32 denotes a passenger compartment air temperature presetting device, 33 denotes a passenger compartment air temperature sensor for sensing the passenger compartment air temperature $T_0$, 34 denotes an outlet duct air temperture sensor for sensing an outlet duct air temperature $T_D$, and 35 denotes an analog to digital converter for converting the analog signals from the above sensors and presetting device 30 to 34 into corresponding digital signals.

The numeral 40 denotes an arithmetic control unit including a base outlet duct air temperature calculating unit 41 for digitally calculating the base outlet duct air temperature $T_{ACO}$ in accordance with the equation (3) described hereinabove, a temperature correction value calculating unit 42 for digitally calculating the temperature correction value $\Delta T$ in accordance with the equation (5) described hereinabove, an adding unit 43 for producing a target outlet duct temperature $T_{AC}$ by adding the temperature correction value $\Delta T$ to the basic outlet duct temperature $T_{ACO}$, and a comparator 44 for comparing a detected outlet duct air temperature $T_D$ with the target outlet duct temperature $T_{AC}$.

The constant values a to d in equations (2) to (5) are stored in an appropriate memory means provided within the arithmetic control unit 40. 45 denotes a digital to analog converter for converting the digital output signal of the comparator 44 into an analog signal. The reference numeral 46 indicates an actuator driver which is responsive to the output signal of the digital to analog converter 45, such as the solenoid values 13 and 14 shown in Fig. 1. The numeral 47 indicates an actuator such as the actuator 11 shown in Fig. 1 for adjusting the air mix door position in accordance with the control vacuum of the actuator driver 46.

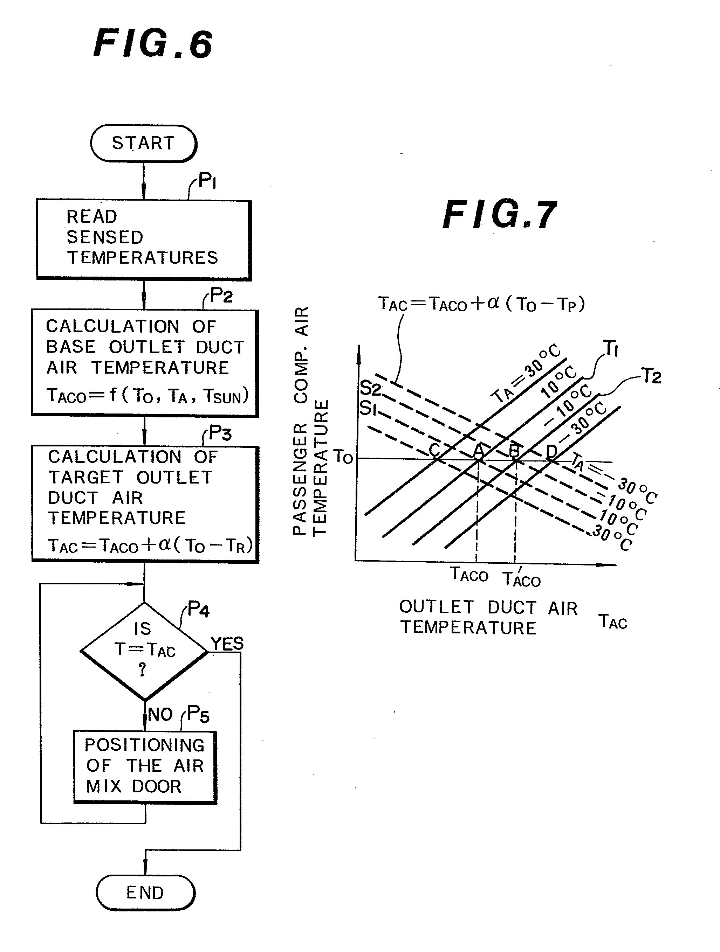

The operation of the above system is now explained with reference to the flow chart shown in Fig. 6.

In a step $P_1$, signals from the analog to digital converter 35, respectively indicative of the solar heat temperaure $T_S$, the outside air temperature $T_A$, the passenger compartment air temperature $T_P$ and the preset value of the passenger compartment air temperature $T_0$ and the detected value of the outlet duct air temperature $T_D$ are read into the airthmetic control unit 40.

Nextly, in a step $P_2$, the base outlet duct air temperature $T_{AC}$ is arithmetically calculated in accordance with the above mentioned equation (3) on the basis of the solar heat temperature $T_S$, outside air temperature $T_A$, and a preset value of the passenger compartment air temperaure $T_O$.

Then, in a step $P_3$, the temperature correction value $\Delta T$ is arithmetically calculated in accordance with the above mentioned equation (5), on the basis of the preset and detected value of the passenger compartment air temperature, and so calculated temperature correction value $\Delta T$ is added to the base outlet duct air temperature $T_{ACO}$ for producing the target outlet duct air temperature $T_{AC}$. In a step $P_4$, whether or not the detected value of the outlet duct air temperatue $T_D$ is equal to the target outlet duct air temperature $T_{AC}$ is detected. In this step, if there is a difference between the detected and the target values of the outlet duct air temperature $T_D$, $T_{AC}$, an actuator drive signal is produced in a step $P_5$ for actuating one of the control valves 14 and 15. These steps $P_4$ and $P_5$ are repeated until the detected outlet duct air temperatue $T_D$ becomes equal to the target outlet duct air temperature $T_{AC}$.

Fig. 5(b) is a schematic diagram of a second embodiment of the air conditioning system according to the present invention, in which a micro computer is used in place of the arithemetic control unit 40 shown in Fig. 5(a).

In the figure, the numeral 401 denotes a micro computer having a central processing unit (CPU) 401 to execute various arithmetic operation in accordance with stored programs, a read only memory (ROM) 402 which stores necessary programs, and a random access memory (RAM) 403 in which various data and calculated results are stored during execution of arithmetic operations, in the same manner as the preveous embodiment, the signals indicative of the temperature values as described in the previous embodiment are converted into corresponding digital signals at an analog to digital converter 35 and then input into the CPU 401.

The ROM 403 stores program necessary to carry out the operation shown in Fig. 6.

The CPU 401 calculates a base outlet duct air temperature $T_{ACO}$, in accordance with the predetermined equation (3), and the temperature correction value in accordance with the predetermined equation (5).

The CPU 401, then produces the target outlet duct temperature $T_{AC}$ by adding the caluculated value of the temperature correction value $\Delta T$ to the base outlet duct temperature $T_{ACO}$. The target outlet duct temperature $T_{AC}$ is then compared with the actually detected outlet duct air temperature $T_D$ by the CPU 401. If the detected outlet duct air temperature $T_D$ is not equal to the target outlet duct air temperature $T_{AC}$, an actuator drive signal is input from the CPU 401 into the actuator driver 46 via the digital to analog converter 45, in order to adjust the position of the air mix door until the detected outlet duct temperature $T_D$ becomes equal to the target outlet duct temperature $T_{AC}$.

Fig. 7 shows a temperature control charateristic of the above explained air conditioning system according to the present invention.

As shown, when an appropriate preset value of the passenger compartment air temperature $T_O$ is given, and the detected outside air temperature $T_A$ has the value of, for example, +10°C, the base outlet duct air temperature is arithmetically calculated in accordance with the heat equilibrium equation on the basis of the thermal load characteristic T1 at the outside air temperature $T_A$ of +10 °C. Then, the temperature control characteristic S1 corresponding to the outside air temperature of +10°C is determined in accordance with the calculated value of the base outlet duct air temperature $T_{ACO}$.

Then if the outside air temperature is changed to −10°C, under the same passenger compartment temperature preset value $T_O$, the base outlet duct air temperature is shifted to a point $T'_{ACO}$ by an amount on the basis of the thermal load characteristic $T_2$ at the outside air temperatue of $-10°C$. Accordingly, the temperature control characteristic of the air conditioning system is shifted to the dashed line $S_2$ corresponding to the new value of the outside air temperature $T_A$.

In this way, the temperature control characteristic of the air conditioning system is automatically altered on the basis of the calculated value of the base outlet duct air temperature $T_{ACO}$. Therefore, it is possible to effect an accurate control of the outlet duct air temperature and the passenger compartment air temperature is precisely maintained at a desired preset value reagrdless of the change in the magnitude of the thermal load applied to the passenger compartment.

It will be understood by those skilled in the art that foregoing description is in terms of preferred embodiment of the present invention wherein various changes and modifications may be made without departing from the spirit and scope of the invention, as set forth in the appended claims.

For example, a signal indicative of an air mix door position can be used in place of the signal indiactive of the detected outlet duct air temperature $T_D$ which is used in the case of the preferred embodiment.

-22-

In such a case, the system can be constructed so that a target air mix door opening degree is produced by combining respectively calulated value of a base air mix door opening degree and a correction value obtained by similar manners as the case of the base outlet duct air temperature and the temperature correction value of the preferred embodiments, and so that the air mix door position is adjusted so as to minimize the difference between the calculated target air mix door opening degree and the detected value of the air mix door opening degree.

WHAT IS CLAIMED IS:

1.    A control method for an air conditioning system for an automotive vehicle, the air conditioning system having an outlet duct via which conditioned air is discharged into a passenger compartment and an air mix door to control the mixing of a hot air with a cool air to provide the conditioned air, the control method comprising the steps of:

    (a) detecting at least an outside air temperature $T_A$ and a passenger compartment air temperature $T_P$;

    (b) setting a desired passenger compartment air temperature $T_0$;

    (c) performing arithmetic operation based on said desired passenger compartment air temperature $T_P$ and outside air temperature $T_A$ to provide a target outlet duct air temperature $T_{AC}$; and

    (d) controlling the opening position of the air mix door in accordance with said target outlet duct air temperature $T_{AC}$.

2.    A control method as claimed in claim 1, wherein said arithmetic operation includes calculation of a first equation representing heat equilibrium condition between the heat supplied by the outlet duct air and the thermal load applied to the passenger compartment to provide a base outlet duct air temperature $T_{ACO}$ and a calculation of a second equation which determines a temperature control characteristics of the outlet duct air to provide a temperarure correction value $\Delta T$.

3.    A control method as claimed in claim 2, wherein said first equation is

$$T_{ACO} = aT_0 + bT_A + cT_S + d$$

where $T_0$ is the preset passenger compartment air temperature, $T_A$ is an outside air temperature, $T_S$ is a solar heat temperature, a, b, c, and d are constants, and wherein said second equation is

$$\Delta T = \propto (T_0 - T_P)$$

where $T_0$ is a preset passenger compartment air temperature, $T_P$ is the detected value of the passenger compartment air temperature , and $\propto$ is a constant.

4.    A control method as clamed in claim 1, wherein said controlling step comprises steps of:

(a)   comparing said target outlet duct air temperature $T_{AC}$ with said detected passenger compartment air temperature to provide a difference therebetween;

(b) generating an air mix door actuator drive signal so as to reduce said difference; and

(c) actuating the air mix door in accordance with said air mix door actuator drive signal, whereby the air mix door position is adjusted at a position for providing an outlet duct air temperature equal to the target outlet duct air temperature.

5. A control system for an air conditioning system for an automotive vehicle, the air conditioning system having an outlet duct via which conditioned air is discharged into a passenger compartment and an air mix door to control the mixing of a hot air with a cool air to provide the conditioned air, the control system comprising:

(a) a passenger compartment air temperature presetting device for presetting a desired passenger compartment air temperature $T_0$;

(b) an outside air temperature sensor for sensing an outside air temperature $T_A$;

(c) passenger compartment air temperature sensor for sensing a passenger compartment air temperatrue $T_p$;

(d) an arithmetic control unit for performing arithmetic operation based on said desired passenger compartment air temperature $T_p$ and outside air temperature $T_A$ to provide a target outlet duct air temperature $T_{AC}$; and

(e) means for controlling the opening position of the air mix door in accordance with said target outlet duct air temperature $T_{AC}$.

6. A control system as claimed in claim 5, wherein said arithmetic control unit comprises:

(a) a first arithemetic unit for calculating a base outlet duct air temperature $T_{ACO}$ in accordance with an equation representing a heat equilibrium condition between the heat supplied by the outlet duct air and a thermal load applied to the passenger compartment;

(b) a second arithmetic unit for calclating a temperature correction value $\Delta T$ in accordance with a second equation which determines a temperature control characteristic of the outlet duct air; and

(c) an adding unit for providing the target oulet duct air temperature by adding said temperature correction value to said base outlet duct air temperature $T_{ACO}$.

7. A control system as claimed in calim 6, wherein said first equation is

$$T_{ACO} = aT_O + bT_A + cT_S + d$$

where $T_O$ is the preset passenger compartment air temperature, $T_A$ is the outside air temperature, $T_S$ is a solar heat temperature, a, b, c, and d are constants, and wherein said second equation is

$$\Delta T = \alpha (T_0 - T_P)$$

where $T_0$ is a preset passenger compartment air temperature, $T_P$ is the detected value of the passenger compartment air temperature, and $\alpha$ is a constant.

8. A control system as claimed in claim 5, wherein said opening position control means comprises:

(a) a comparator for comparing said target outlet duct air temperature $T_{AC}$ with said detected passenger compartment air temperature to provide a difference therebetween;

(b) means for generating an air mix door actuator drive signal so as to reduce said difference; and

(c) an air mix door actuator for actuating the air mix door in accordance with said drive signal, whereby the air mix door position is adjusted at a position for providing an outlet duct air temperature equal to the target outlet duce air temperature $T_{AC}$.

9. A control system for an air conditioning system for an automotive vehicle, the air conditioning system having an outlet duct via which conditioned air is discharged into a passenger compartment and an air mix door to provide the conditioned air, the control system comprises:

(a) a passenger compartment air temperature presetting device for presetting a desired passenger compartment air temperature $T_0$;

(b) an outside air temperature sensor for sensing an outside air temperature $T_A$;

(c) a passenger compartment air temperature sensor for sensing a passenger compartment air temperature $T_P$;

(d) a micro computer which includes:

(1) a central processing unit for executing various arithmetic operation in accordance with programs;

(2) a read-only memory for storing programs thereinto;

(3) a random-access memory for storing calculated results produced by said central processing unit in accordance with the program stored in said read-only memory during execution of arithemetic operations;

(4) a clock signal generator for providing a high-frequency clock timing pulse signal,

said central processing unit first calculating a base outlet duct air temperature $T_{ACO}$ on the basis of the preset passenger compartment air temperature $T_0$, the outside air temperature $T_A$, and the solar heat temperature $T_S$, in accordance with a predetermined heat equilibrium equation stored in said read-only memory

calculating a temperature correction value $\Delta T$ on the basis of the preset passenger compartment air temperature $T_0$ and the detected passenger compartment air temperatue $T_P$ in accordance with a temperature control characteristic equation stored in said read-only memory; and

producing a target outlet duct air temperature by adding said temperature correction value $\Delta T$ to said base outlet duct air temperatue $T_{ACO}$; and

(e) means for positioning the air mix door in accordance with said target outlet duct air temperature $T_{AC}$.

## FIG.1

## FIG.2 PRIOR ART

# FIG.3(a)

PASS. COMP. AIR TEMPERATURE

T

OUTLET DUCT AIR TEMPERATURE

# FIG.3(b)

PASS. COMP. AIR TEMPERATURE

S

OUTLET DUCT AIR TEMPERATURE

# FIG.3(c)

PASS. COMP. AIR TEMPERATURE

S          T

P

OUTLET DUCT AIR TEMPERATURE

# FIG.4

$T_P$

PASS. COMP. AIR TEMPERATURE

$S_2$
$S_1$

$T_A = 30°C$
$10°C$
$-10°C$
$-30°C$

$T_o$          C   A   B   D          d

d

$T_A = -30°C$
$-10°C$
$10°C$
$30°C$

OUTLET DUCT AIR TEMPERATURE   $T_{AC}$

# FIG. 5(a)

```
30 ─ OUTSIDE AIR TEMP. SENSOR ──TA──┐
31 ─ SOLAR HEAT TEMP. SENSOR ──TS──┐
32 ─ PASS. COMP. AIR TEMP. PRESET DEVICE ──TO──┐
33 ─ PASS. COMP. AIR TEMP. SENSOR ──TP──┐
34 ─ OUTLET DUCT AIR TEMP. SENSOR ──TD──┐
```

35 ─ A-D CONVERTER

41 ─ BASE OUTLET DUCT TEMPERATURE CALCULATING UNIT

42 ─ TEMPERATURE CORRECTION VALUE CALCULATING UNIT

43 ─ ADDER CIRCUIT

44 ─ COMP.

40

45 ─ D-A CONVERTER

46 ─ ACTUATOR DRIVER

47 ─ AIR MIX DOOR ACTUATOR

$T_{AC}$  $T_{ACO}$  $\Delta T$

**FIG.5(b)**

# FIG.6

START

P1
READ SENSED TEMPERATURES

P2
CALCULATION OF BASE OUTLET DUCT AIR TEMPERATURE
$T_{ACO} = f(T_O, T_A, T_{SUN})$

P3
CALCULATION OF TARGET OUTLET DUCT AIR TEMPERATURE
$T_{AC} = T_{ACO} + \alpha(T_O - T_R)$

P4
IS $T = T_{AC}$ ? — YES

NO — P5
POSITIONING OF THE AIR MIX DOOR

END

# FIG.7

$T_{AC} = T_{ACO} + \alpha(T_O - T_P)$

PASSENGER COMP. AIR TEMPERATURE

$T_A = 30°C$
$10°C$
$-10°C$
$-30°C$
$S_2$
$S_1$
$T_1$
$T_2$
$T_O$
C   A   B   D
$T_A =$
$30°C$
$10°C$
$10°C$
$30°C$

$T_{ACO}$   $T'_{ACO}$

OUTLET DUCT AIR TEMPERATURE   $T_{AC}$

0051307

European Patent
Office

**EUROPEAN SEARCH REPORT**

Application number

EP 81 10 9411

## DOCUMENTS CONSIDERED TO BE RELEVANT

| Category | Citation of document with indication, where appropriate, of relevant passages | Relevant to claim |
|---|---|---|
| X | DE - A - 2 939 954 (NIPPON DENSO)<br><br>* Page 14, line 20 - page 18, line 1; page 20, line 7 - page 22, line 2; page 23, line 18 - page 25, line 23; page 30, lines 10-19; page 35, lines 2-12; page 36, line 15 - page 37, line 18; page 42, line 23 - page 43, line 18; page 55, line 19 - page 57, line 10; figures 1,7 *<br><br>-- | 1-3,5-7,9 |
| A | EP - A - 0 007 775 (NIPPON DENSO)<br><br>* Page 5, line 31 - page 7, line 12; page 9, line 10 - page 10, line 21; page 11, lines 15-32; claim 1; figure 1 *<br><br>-- | 1-3,5-7,9 |
| E | DE - A - 3 029 148 (NIPPON DENSO)<br><br>* Page 1, line 1 - page 2, line 22; page 6, line 15 - page 7, line 9; page 13, line 5 - page 15, line 30; figures 1-3 *<br><br>-- | 1-3,5-7,9 |
| E | EP - A - 0 021 353 (NIPPON DENSO)<br><br>* Page 5, line 3 - page 10, line 14; figure 1 *<br><br>-- | 1-3,5-7,9 |
| A | FR - A - 2 387 134 (S.E.V. MARCHAL)<br><br>& US - A - 4 223 720 | 1 |
| A | DE - A - 2 621 663 (DAIMLER BENZ)<br><br>---- | 1 |

### CLASSIFICATION OF THE APPLICATION (Int. Cl. 3)

B 60 H 1/00

### TECHNICAL FIELDS SEARCHED (Int.Cl. 3)

B 60 H 1/00
           3/00
G 05 D 23/19
           23/20
           23/24

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 09-02-1982 | HELOT |

EPO Form 1503.1 06.78